# EUROPÄISCHE PATENTANMELDUNG

(11) **EP 4 782 805 A2**
(43) Veröffentlichungstag der Anmeldung: **29.07.2026**
(21) Anmeldenummer: 26153511.6
(22) Anmeldetag: 22.01.2026
(51) Int. Cl.: G01L 1/16, G01L 1/18, G01L 9/00

(54) **DRUCKVORRICHTUNG, VORZUGSWEISE DRUCKBEHÄLTER ODER DRUCKSCHLAUCH**

(30) Priorität: 23.01.2025 DE 102025102413
(71) Anmelder: ContiTech Deutschland GmbH, 30175 Hannover (DE)
(72) Erfinder: Reck, Siegfried, 30175 Hannover (DE)
(74) Vertreter: Preusser, Andrea

(57) **Zusammenfassung**

Die vorliegende Erfindung betrifft eine Druckvorrichtung (1), vorzugsweise einen Druckbehälter (1) oder einen Druckschlauch (1), mit einer Hülle (10), welche einen Innenraum (11) zur Aufnahme eines Fluids zumindest im Wesentlichen fluiddicht umschließt. Die Druckvorrichtung (1) ist dadurch gekennzeichnet, dass die Hülle (10) wenigstens einen hochfrequenten Resonator (12) aufweist, welcher ausgebildet ist, von außerhalb der Druckvorrichtung (1) mittels eines Hochfrequenzsignals (B) zu Schwingungen angeregt zu werden und in Reaktion hierauf ein Resonanzsignal nach außerhalb der Druckvorrichtung (1) zurückzusenden, wobei der Reflektionsfaktor des hochfrequenten Resonators (12) aus anregendem Hochfrequenzsignal (B) und zurückgesendetem Resonanzsignal, vorzugsweise proportional, von der Dehnung des hochfrequenten Resonators (12) abhängig ist.

## Beschreibung

Die vorliegende Erfindung betrifft eine Druckvorrichtung, vorzugsweise einen Druckbehälter oder einen Druckschlauch, sowie ein Drucksystem mit einer derartigen Druckvorrichtung und einer Auslesevorrichtung.

Für viele Anwendungen werden Druckbehälter und Druckschläuche verwendet.

Unter Druckbehältern werden geschlossene Behälter verstanden, deren Innendruck größer als der Umgebungsdruck ist. Dies gilt entsprechend für Druckschläuche. Druckbehälter und Druckschläuche müssen dauerhaft sicher betrieben werden können, d.h. dürfen im Betrieb, wenn sie unter Druck stehen, nicht lecken und schon gar nicht reißen bzw. bersten, wodurch die Umgebung gefährdet werden könnte.

Der Innendruck belastet die Gefäßwände der Druckbehälter bzw. Drückschläuche und dehnt die Gefäßwände entsprechend. Im Dauerbetrieb und insbesondere bei zyklischen Belastungen ermüdet daher das Material der Gefäßwände und es können mikroskopische Risse entstehen, welche sich über die Zeit bzw. über die Anzahl der Belastungszyklen vergrößern und letztlich zum Versagen der Gefäßwände führen können. Dies gilt entsprechend für hohe statische Drücke, da dann das Material der Gefäßwände "kriechen" kann, d. h. das Material der Gefäßwände kann sich plastisch verformen, obwohl die mechanischen Spannungen unterhalb der Streckgrenze liegen. Thermische Spannungen können zusätzliche Belastungen verursachen und die Lebensdauer der Druckbehälter bzw. Drückschläuche bzw. deren Gefäßwände verringern.

Um einen sicheren Betrieb der Gefäße der Druckbehälter bzw. Drückschläuche zu gewährleisten, ist es bisher im einfachsten Fall üblich, die Druckbehälter bzw. Drückschläuche in festgelegten zeitlichen Intervallen auszutauschen. Dies führt jedoch dazu, dass Schäden doch auftreten können, falls das Austauschintervall zu lang gewählt wird. Andernfalls werden ggfs. noch länger funktionsfähige Produkte ausgetauscht und weggeschmissen, obwohl sie noch und ggfs. sogar länger verwendet werden könnten. Dies führt zu einer Verschwendung von Ressourcen sowie zu Kosten für die neuen Produkte.

Um diesen pauschalen und üblicherweise verfrühten Austausch der Druckbehälter bzw. Drückschläuche zu vermeiden, ist es bekannt, die Gefäße zu inspizieren, was als zerstörungsfreie Prüfungen mittels Ultraschalls oder Röntgenstrahlung erfolgen kann. Dies führt jedoch auch zu einem gewissen personellen Aufwand sowie erfordert den Einsatz der entsprechenden Prüftechnik am Einsatzort der Druckbehälter bzw. Drückschläuche, sofern die Druckbehälter bzw. Drückschläuche nicht zu einer Prüfeinrichtung transportiert werden sollen oder können.

Eine Aufgabe der vorliegenden Erfindung ist es, die Möglichkeiten der Überwachung von Druckbehältern und bzw. oder Drückschläuchen der eingangs beschriebenen Art auf deren Fluiddichtigkeit zu verbessern. Dies soll vorzugsweise kontinuierlich und bzw. oder im laufenden Betrieb erfolgen können. Zumindest soll eine Alternative zu den bekannten Möglichkeiten zur Verfügung gestellt werden.

Die Aufgabe wird erfindungsgemäß durch eine Druckvorrichtung sowie durch ein Drucksystem mit den Merkmalen der unabhängigen Ansprüche gelöst. Vorteilhafte Weiterbildungen sind in den Unteransprüchen beschrieben.

Somit betrifft die vorliegende Erfindung eine Druckvorrichtung, vorzugsweise einen Druckbehälter oder einen Druckschlauch, mit einer Hülle, welche einen Innenraum zur Aufnahme eines Fluids zumindest im Wesentlichen fluiddicht umschließt. Die Hülle ist entsprechend ausgebildet, das Fluid bei einem Innendruck aufzunehmen, welcher größer als der Umgebungsdruck ist. Das Fluid kann ein Gas oder eine Flüssigkeit sein. Das Fluid kann insbesondere Wasserstoff sein.

Die erfindungsgemäße Druckvorrichtung ist dadurch gekennzeichnet, dass die Hülle wenigstens einen hochfrequenten Resonator aufweist, welcher ausgebildet ist,
- von außerhalb der Druckvorrichtung mittels eines Hochfrequenzsignals zu Schwingungen angeregt zu werden und
- in Reaktion hierauf ein Resonanzsignal nach außerhalb der Druckvorrichtung zurückzusenden,
wobei der Reflektionsfaktor des hochfrequenten Resonators aus anregendem Hochfrequenzsignal und zurückgesendetem Resonanzsignal, vorzugsweise proportional, von der Dehnung des hochfrequenten Resonators abhängig ist.

Auf diese Art und Weise kann die Dehnung der Hülle der Druckvorrichtung kontinuierlich und berührungslos erfasst und somit überwacht werden, um bei unzulässig starken Dehnungen auf eine drohende Beschädigung der Hülle zu schließen und dann das Fluid aus dem Innenraum zu entfernen sowie die Hülle zu reparieren bzw. die Druckvorrichtung auszutauschen. Hierdurch können sonstige bisher bekannte Überwachungs- sowie Inspektionsmaßnahmen vermieden werden. Auch kann ein verfrühter und damit unnötiger Austausch von Druckvorrichtungen vermieden werden, was entsprechende Kosten und Ressourcen sparen kann.

Gemäß einem Aspekt der Erfindung ist der hochfrequente Resonator feststehend auf der Hülle und bzw. oder innerhalb der Hülle angeordnet. Die Anordnung des hochfrequenten Resonators innerhalb der Hülle kann den hochfrequenten Resonator vor äußeren Einflüssen wie Berührung, Feuchtigkeit, Schmutz und dergleichen schützen. Die Anordnung des hochfrequenten Resonators auf der Hülle kann die Befestigung des hochfrequenten Resonators erleichtern und nachträglich bzw. unabhängig von der Herstellung der Hülle ermöglichen.

Gemäß einem weiteren Aspekt der Erfindung ist die Hülle dehnbar, vorzugsweise aus einem elastomeren Material, ausgebildet. Dies kann eine konkrete Möglichkeit der Umsetzung darstellen.

Gemäß einem weiteren Aspekt der Erfindung erstreckt sich der hochfrequente Resonator im Wesentlichen entlang einer bevorzugten Erstreckungsrichtung, welche einer bevorzugten Erstreckungsrichtung der Druckvorrichtung entspricht. Dies kann eine Erfassung der Dehnung genau entlang der bevorzugten Erstreckungsrichtung der Druckvorrichtung ermöglichen.

Gemäß einem weiteren Aspekt der Erfindung weist die Hülle zumindest abschnittsweise eine mantelförmige Metallisierung mit länglichen Spalten als Schlitzantennen auf, welche den hochfrequenten Resonator bilden. Dies kann eine konkrete Möglichkeit der Umsetzung darstellen.

Gemäß einem weiteren Aspekt der Erfindung wird der hochfrequente Resonator von mehreren Einzelschwingern gebildet, deren Abstand zueinander geringer als die Wellenlänge des Hochfrequenzsignals ist. Dies kann die Trennschärfe des Resonators erhöhen.

Gemäß einem weiteren Aspekt der Erfindung weist der hochfrequente Resonator wenigstens eine Dipolantenne auf, vorzugsweise wird von einer Dipolantenne gebildet. Dies kann eine alternative konkrete Möglichkeit der Umsetzung darstellen.

Gemäß einem weiteren Aspekt der Erfindung ist die Dipolantenne des hochfrequenten Resonators als Mikrostreifenleitung ausgebildet. Hierdurch können die entsprechenden Eigenschaften bei dem hochfrequenten Resonator umgesetzt und genutzt werden.

Die vorliegende Erfindung betrifft auch ein Drucksystem mit einer Druckvorrichtung wie zuvor beschrieben und mit einer Auslesevorrichtung, welche ausgebildet ist,
- den hochfrequenten Resonator der Druckvorrichtung mittels eines Hochfrequenzsignals zu Schwingungen anzuregen und
- ein in Reaktion hierauf vom hochfrequenten Resonator der Druckvorrichtung zurückgesendetes Resonanzsignal zu erfassen,
wobei die Auslesevorrichtung ferner ausgebildet ist, aus dem anregenden Hochfrequenzsignal und aus dem zurückgesendeten Resonanzsignal einen Reflektionsfaktor des hochfrequenten Resonators zu bestimmen, wobei die Auslesevorrichtung ferner ausgebildet ist, aus dem bestimmten Reflektionsfaktor des hochfrequenten Resonators die Dehnung des hochfrequenten Resonators zu bestimmen.

Auf diese Art und Weise kann die zuvor beschriebene Druckvorrichtung um eine Auslesevorrichtung ergänzt werden, um die Dehnung der Hülle der Druckvorrichtung zu bestimmen.

Gemäß einem Aspekt der Erfindung ist der Reflektionsfaktor des hochfrequenten Resonators der frequenzabhängige Reflexionsfaktor S11. Dies kann eine konkrete Möglichkeit der Umsetzung darstellen.

Gemäß einem weiteren Aspekt der Erfindung ist die Auslesevorrichtung ausgebildet, die Frequenz des Hochfrequenzsignals durchzustimmen. Somit kann die Frequenz des Hochfrequenzsignals verändert bzw. breitbandig ausgesendet werden, um die Resonanzfrequenz des hochfrequenten Resonators auch bei Dehnung anregen zu können.

Gemäß einem weiteren Aspekt der Erfindung ist die Auslesevorrichtung ferner ausgebildet, aus der Verschiebung der Resonanzfrequenz des zurückgesendeten Resonanzsignals gegenüber dem anregenden Hochfrequenzsignal den Reflektionsfaktor des hochfrequenten Resonators zu bestimmen.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Drucksystems mit erfindungsgemäßer Druckvorrichtung und Auslesevorrichtung; und
- Fig. 2: eine schematische Darstellung des erfindungsgemäßen Drucksystems mit erfindungsgemäßer Druckvorrichtung und Auslesevorrichtung.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

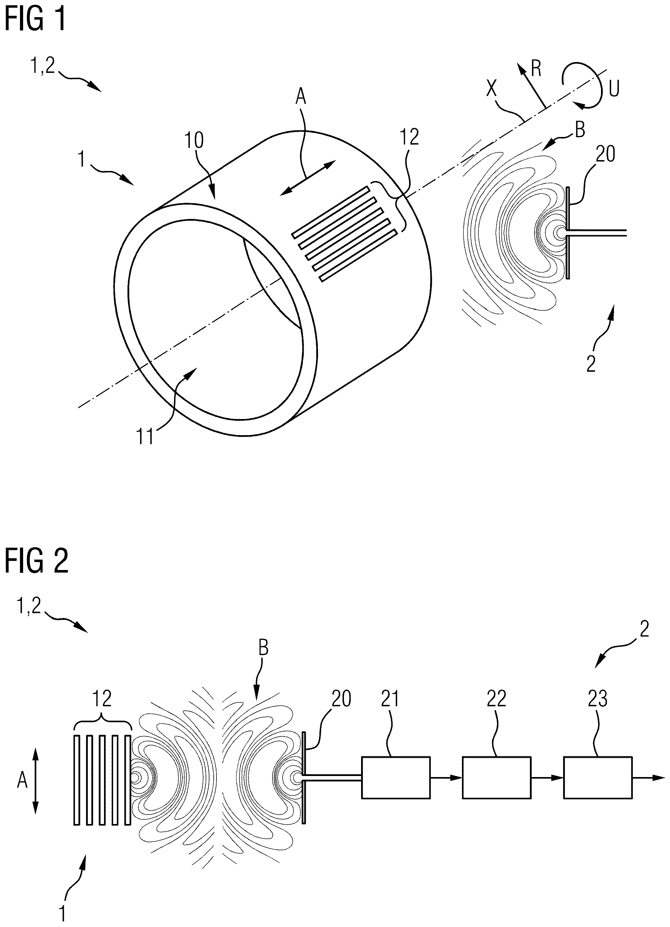

Die Figur 1 zeigt eine perspektivische schematische Darstellung eines erfindungsgemäßen Drucksystems 1, 2 mit erfindungsgemäßer Druckvorrichtung 1 und Auslesevorrichtung 2. Die Druckvorrichtung 1 kann ein Druckbehälter 1 oder ein Drückschlauch 1 sein. Die Druckvorrichtung 1 weist eine Hülle 10 auf, welche auch als Gefäßwandung 10 bezeichnet werden kann und im Wesentlichen aus einem elastomeren Material besteht, ggfs. mit einer Verstärkungsschicht (nicht dargestellt). Die Hülle 10 umschließt einen Innenraum 11 im Wesentlichen, d.h. bis auf wenigstens eine Öffnung, um ein Fluid in den Innenraum 11 zu füllen sowie aus dem Innenraum 11 zu entnehmen, z.B. abzulassen oder abzupumpen.

Um die Möglichkeiten der Überwachung der Fluiddichtigkeit der Druckvorrichtung 1 zu verbessern, wird die Hülle 10 der Druckvorrichtung 1 mit mindestens einer leitfähigen bzw. resonanten Struktur versehen, die als hochfrequenter Resonator 12 ausgestaltet sowie von außen auf der Hülle 10 drauf angeordnet ist. Dieser Resonator 12 ist unlösbar mit der Hülle 10 verbunden, so dass der Resonator 12 derselben betriebsbedingten Dehnung ausgesetzt ist wie die Hülle 10. Die Dehnung wirkt auf die geometrischen Abmessungen, hauptsächlich auf die Länge entlang der Längsachse X, des Resonators 12 und ändert dessen Resonanzfrequenz und dessen Reflexionsverhalten.

Um die Dehnung zu bestimmen, wird der frequenzabhängige Reflexionsfaktor S11 des Resonators 12 gemessen, der mit der Dehnung verknüpft ist. Dazu bestrahlt eine Sende-/Empfangsantenne 20 einer Auslesevorrichtung 2 den hochfrequenten Resonator 12 mit einem Hochfrequenzsignal B mit durchstimmbarer Frequenz. Die Sende-/Empfangsantenne 20 wird von einem Netzwerkanalysator 21 gespeist.

Die Figur 2 zeigt eine schematische Darstellung des erfindungsgemäßen Drucksystems 1, 2 mit erfindungsgemäßer Druckvorrichtung 1 und Auslesevorrichtung 2 hinsichtlich der Auswertung und Datenübertragung. Der Netzwerkanalysator 21 misst die abgestrahlte Leistung und die vom hochfrequenten Resonator 12 reflektierte Leistung. Aus diesen Werten ermittelt eine Auswerte-Einheit 22 den Reflexionsfaktor S11. Anstelle des Betrags des Reflexionsfaktors S11 wird die Verschiebung der Resonanzfrequenz ausgewertet.

Sowohl im ungedehnten Zustand als auch bei Dehnung ist der Reflexionsfaktor S11 minimal bei Resonanz. Aus der Verstimmung zwischen der nominellen Frequenz des Resonator 12 im ungedehnten Zustand und der tatsächlichen Resonanzfrequenz des Resonators 12, welcher einer Dehnung unterliegen kann, berechnet eine Auswerteeinheit 22 die aktuelle Dehnung der Hülle 10 der Druckvorrichtung 1. Die Auswerteeinheit 22 übermittelt die Ergebnisse der Dehnungsmessung über eine Schnittstelle 23 drahtgebunden an einen externen Empfänger (nicht dargestellt).

Wenn die drahtgebundene Abfrage des hochfrequenten Resonators 12 auf der Druckvorrichtung 1 nicht möglich ist, kann diese auch direkt abgefragt werden, z. B. bei einem Wasserstofftank in einem verunglückten Fahrzeug. Da in diesem Fall eine höhere Sendeleistung erforderlich ist, kann die Resonanzfrequenz des hochfrequenten Resonators 12 in einem freigegebenen Frequenzband gewählt werden.

Die Hülle 10 der Druckvorrichtung 1 wird mit einer mantelförmigen Metallisierung (nicht dargestellt) versehen, die zwischen 5 Mikrometern und 50 Mikrometern stark ist. An definierten Stellen der Metallisierung befinden sich längliche, schmale Spalte (nicht bezeichnet), d.h. deren Länge ist größer als die Breite, die als sogenannte Schlitzantennen wirken und den hochfrequenten Resonator 12 bilden. Ähnlich wie bei klassischen Dipolen bestimmt die Länge der Schlitze die Resonanzfrequenz.

Um die Trennschärfe der Resonatoren 12 zu erhöhen, können mehrere Einzelschwinger, deren Abstand klein ist gegenüber der Wellenlänge, zu komplexen Resonatoren 12 zusammengefasst werden.

Alternativ können anstelle der Schlitzantennen klassische Dipole zur Ausbildung des hochfrequenten Resonators 12 verwendet werden, die als Mikrostreifenleitungen realisiert und unlösbar mit der Hülle 10 der Druckvorrichtung 1 verbunden sind. Dabei ist zu beachten, dass die elektrische und die magnetische Komponente vertauscht sind.

### Bezugszeichenliste (Teil der Beschreibung)

- A: bevorzugte Erstreckungsrichtung der Druckvorrichtung 1 sowie des hochfrequenten Resonators 12
- B: Hochfrequenzsignal der Sende-/Empfangsantenne 20

- R: radiale Richtung
- U: Umfangsrichtung
- X: Längsachse

- 1, 2: Drucksystem

- 1: Druckvorrichtung; Druckbehälter; Drückschlauch
- 10: Hülle; Gefäßwandung
- 11: Innenraum
- 12: hochfrequenter Resonator

- 2: Auslesevorrichtung
- 20: Sende-/Empfangsantenne
- 21: Netzwerkanalysator
- 22: Auswerteeinheit
- 23: Schnittstelle

## Patentansprüche

1. Druckvorrichtung (1), vorzugsweise Druckbehälter (1) oder Druckschlauch (1),
mit einer Hülle (10), welche einen Innenraum (11) zur Aufnahme eines Fluids zumindest im Wesentlichen fluiddicht umschließt,
**dadurch gekennzeichnet, dass**
die Hülle (10) wenigstens einen hochfrequenten Resonator (12) aufweist, welcher ausgebildet ist,
• von außerhalb der Druckvorrichtung (1) mittels eines Hochfrequenzsignals (B) zu Schwingungen angeregt zu werden und
• in Reaktion hierauf ein Resonanzsignal nach außerhalb der Druckvorrichtung (1) zurückzusenden,
wobei der Reflektionsfaktor des hochfrequenten Resonators (12) aus anregendem Hochfrequenzsignal (B) und zurückgesendetem Resonanzsignal, vorzugsweise proportional, von der Dehnung des hochfrequenten Resonators (12) abhängig ist.

2. Druckvorrichtung (1) nach Anspruch 1,
wobei der hochfrequente Resonator (12) feststehend auf der Hülle (10) und/oder innerhalb der Hülle (10) angeordnet ist.

3. Druckvorrichtung (1) nach Anspruch 1 oder 2,
wobei die Hülle (10) dehnbar, vorzugsweise aus einem elastomeren Material, ausgebildet ist.

4. Druckvorrichtung (1) nach einem der vorangehenden Ansprüche,
wobei sich der hochfrequente Resonator (12) im Wesentlichen entlang einer bevorzugten Erstreckungsrichtung (A) erstreckt, welche einer bevorzugten Erstreckungsrichtung (A) der Druckvorrichtung (1) entspricht.

5. Druckvorrichtung (1) nach einem der vorangehenden Ansprüche,
wobei die Hülle (10) zumindest abschnittsweise eine mantelförmige Metallisierung mit länglichen Spalten als Schlitzantennen aufweist, welche den hochfrequenten Resonator (12) bilden.

6. Druckvorrichtung (1) nach einem der vorangehenden Ansprüche,
wobei der hochfrequente Resonator (12) von mehreren Einzelschwingern gebildet wird, deren Abstand zueinander geringer als die Wellenlänge des Hochfrequenzsignals (B) ist.

7. Druckvorrichtung (1) nach einem der Ansprüche 1 bis 4,
wobei der hochfrequente Resonator (12) wenigstens eine Dipolantenne aufweist, vorzugsweise von einer Dipolantenne gebildet wird.

8. Druckvorrichtung (1) nach Anspruch 7,
wobei die Dipolantenne des hochfrequenten Resonators (12) als Mikrostreifenleitung ausgebildet ist.

9. Drucksystem (1, 2)
mit einer Druckvorrichtung (1) nach einem der vorangehenden Ansprüche und
mit einer Auslesevorrichtung (2), welche ausgebildet ist,
• den hochfrequenten Resonator (12) der Druckvorrichtung (1) mittels eines Hochfrequenzsignals (B) zu Schwingungen anzuregen und
• ein in Reaktion hierauf vom hochfrequenten Resonator (12) der Druckvorrichtung (1) zurückgesendetes Resonanzsignal zu erfassen,
wobei die Auslesevorrichtung (2) ferner ausgebildet ist, aus dem anregenden Hochfrequenzsignal (B) und aus dem zurückgesendeten Resonanzsignal einen Reflektionsfaktor des hochfrequenten Resonators (12) zu bestimmen,
wobei die Auslesevorrichtung (2) ferner ausgebildet ist, aus dem bestimmten Reflektionsfaktor des hochfrequenten Resonators (12) die Dehnung des hochfrequenten Resonators (12) zu bestimmen.

10. Druckvorrichtung (1) nach Anspruch 9,
wobei der Reflektionsfaktor des hochfrequenten Resonators (12) der frequenzabhängige Reflexionsfaktor S11 ist.

11. Druckvorrichtung (1) nach Anspruch 9 oder 10,
wobei die Auslesevorrichtung (2) ausgebildet ist, die Frequenz des Hochfrequenzsignals (B) durchzustimmen.

12. Druckvorrichtung (1) nach einem der Ansprüche 9 bis 11,
wobei die Auslesevorrichtung (2) ferner ausgebildet ist, aus der Verschiebung der Resonanzfrequenz des zurückgesendeten Resonanzsignals gegenüber dem anregenden Hochfrequenzsignal (B) den Reflektionsfaktor des hochfrequenten Resonators (12) zu bestimmen.
